# EUROPÄISCHE PATENTSCHRIFT

(11) **EP 0 778 182 B1**
(45) Veröffentlichungstag und Bekanntmachung des Hinweises auf die Patenterteilung: **05.03.2003**
(21) Anmeldenummer: 96119714.2
(22) Anmeldetag: 09.12.1996
(51) Int. Cl.: B60R 22/46, B60R 22/18

(54) **Rückhaltesystem in einem Fahrzeug**
Vehicle restraint system
Système de retenue dans un véhicule

(30) Priorität: 08.12.1995 DE 19545898
(43) Veröffentlichungstag der Anmeldung: 11.06.1997
(73) Patentinhaber: HS Technik und Design Technische Entwicklungen GmbH, 82234 Wessling (DE)
(72) Erfinder: Specht, Martin, 82340 Feldafing (DE)
(74) Vertreter: Nöth, Heinz, Dipl.-Phys.

(56) Entgegenhaltungen:
- DE-A- 4 303 095
- DE-A- 4 331 723
- DE-A- 4 342 666
- US-A- 3 871 470
- US-A- 4 191 344

## Beschreibung

Die Erfindung betrifft ein Rückhaltesystem nach dem Oberbegriff des Patentanspruches 1.

Bei einem derartigen aus der US-A-3,871,470 bekannten Rückhaltesystem in einem Fahrzeug, welches einen Dreipunktsicherheitsgurt aufweist, ist dessen Gurtband mit seinem ersten Ende mittels eines Endbeschlages am Fahrzeugaufbau befestigt. Mit seinem zweiten Ende ist das Gurtband des Sicherheitsgurtes mit einer Gurtspule eines Gurtaufrollers verbunden. Die Gurtspule steht unter der Vorspannkraft einer Rückholfeder, mit welcher das Gurtband auf die Gurtspule des Gurtaufrollers im Normalbetrieb aufgerollt wird. Beim Anlegen des Sicherheitsgurtes wird das Gurtband von der Gurtspule abgerollt. Bei einem Dreipunktsicherheitsgurt wird das vom Gurtaufroller kommende Gurtband gegebenenfalls über einen höhenverstellbaren Umlenkbeschlag über Schulterhöhe des Fahrzeuginsassen umgelenkt und verläuft beim Anlegen quer über der Brust des Fahrzeuginsassen zu einer Steckzunge, welche mit dem vom Endbeschlag kommenden Gurtbandteil verbunden ist. Die Steckzunge wird beim Anlegen des Sicherheitsgurtes in ein Gurtschloß, welches am Fahrzeugsitz oder Fahrzeugaufbau verankert ist, gesteckt. Auf diese Weise ergibt sich für den angelegten Sicherheitsgurt eine Dreipunktbefestigung am Fahrzeugaufbau.

Ferner ist aus der US-A-3,871,470 ein Dreipunktsicherheitsgurt bekannt, bei dem beide Gurtbandenden mit jeweiligen Wickelwellen verbunden sind, die am Fahrzeugaufbau befestigten Rahmen innerhalb eines begrenzten Drehwinkelbereiches drehbar gelagert sind. Die beiden Wickelwellen werden bei überhöhter Fahrzeugbeschleunigung bzw. -abbremsung mit Hilfe eines jeweils zugeordneten Gurtstraffers angetrieben, um den am Körper des Fahrzeuginsassen anliegenden Sicherheitsgurt zu strammen. Dadurch wird eine allzu weite Vorverlagerung des Fahrzeuginsassen verhindert, jedoch fehlt bei dieser Anordnung ein Gurtaufroller mit in Bandaufwickelrichtung vorgespannter Gurtspule, so dass das Aufrollen des Sicherheitsgurtes in seine Parkposition nicht möglich ist. Ferner ist aus der DE 43 42 666 A bekannt, die Antriebsbewegung eines im Gurtaufroller integrierten Gurtstraffers über einen in der Gurtspule axial geführten und angetriebenen Kolben auf die Gurtspule zu übertragen. Hierzu ist es erforderlich, daß die vom Gurtstraffer angetriebenen Teile aufgrund der bei der Strafferbewegung auf sie einwirkenden hohen Beschleunigungen ihre Sicherheitsfunktion beibehalten. Hierfür ist ein zusätzlicher konstruktiver Aufwand erforderlich.

Aufgabe der Erfindung ist es daher, ein Rückhaltesystem der eingangs genannten Art zu schaffen, bei welchem beim Strammen des Dreipunktsicherheitsgurtes das Gurtschloß und der Gurtaufroller mit verringerter Belastung betrieben werden und ein Rücklauf des Gurtes nach dem Strammvorgang verhindert wird. Diese Aufgabe wird erfindungsgemäß durch die Merkmale des Patentanspruches 1 gelöst.

Bei der Erfindung ist das am Endbeschlag festgelegte erste Ende des Gurtbandes mit einer Wickelwelle verbunden, welche Bestandteil des Endbeschlages ist. Im Normalbetrieb nimmt die Wickelwelle vom Gurtband ausgehende Kräfte auf und leitet sie weiter in den Fahrzeugaufbau. Beim Strammen des Sicherheitsgurtes wird die Wickelwelle von einem Gurtstrafferantrieb angetrieben. Die Wickelwelle hat daher zwei Funktionen, nämlich die Funktion eines Endbeschlagteils und die Funktion eines vom Kraftspeicher des Gurtstraffers angetriebenen Gurtstrafferteils. Es wird vor allem eine Straffung des Gurtbandes im Beckenbereich erzielt.

Die Wickelwelle ist auf einer axialen Führung, welche direkt oder über einen Befestigungsrahmen mit dem Fahrzeugaufbau fest verbunden ist, zumindest beim Strammen des Sicherheitsgurtes drehbar gelagert. Die axiale Führung kann stabförmig ausgebildet sein und erstreckt sich durch die Mitte des Innenraumes der Wickelwelle.

Die Strafferantriebskraft kann über ein vom Strafferantrieb bewegtes Kraftübertragungsteil auf die Wickelwelle übertragen werden. Hierbei kann es sich um eine feste oder über eine Kupplung mit der Wickelwelle verbindbare Seilscheibe handeln. Die Seilscheibe kann in der Weise ausgebildet sein, wie es in der EP 05 29 265 A 1 beschrieben ist. Hierbei wird ein Seil von einem Linearstraffer angetrieben, und die Antriebsbewegung wird über eine spiralförmige Seilführung der Seilscheibe in eine Drehbewegung auf die Wickelwelle umgesetzt.

In bevorzugter Weise ist jedoch das Kraftübertragungsteil als entlang der Wickelwellenachse antreibbarer Kolben ausgebildet. Der Kolben stützt sich dabei sowohl an der Innenseite der Wickelwelle als auch an der Außenseite der insbesondere stabförmig ausgebildeten axialen Führung, an welcher auch die Wickelwelle drehbar gelagert sein kann, während seiner in axialer Richtung angetriebenen Bewegung ab. Die Abstützung erfolgt dabei wenigstens in einem Gewinde, welches zwischen dem kolbenförmigen Kraftübertragungsteil und der axialen Führung und/oder dem Kraftübertragungsteil und der Wickelwelleninnenseite vorgesehen ist.

Als Strafferantrieb eignet sich bevorzugt ein pyrotechnisches Treibmittel. Dieses kann beispielsweise, wie in der DE 43 31 723 A1 beschrieben, in der axialen Führung angeordnet sein, und über einen oder mehrere Treibgaskanäle kann das gezündete Treibgas in einen Expansionsraum hinter dem angetriebenen Kraftübertragungsteil einmünden.

Bei einem bevorzugten Ausführungsbeispiel ist das pyrotechnische Treibmittel im als Kolben ausgebildeten Kraftübertragungsteil angeordnet.

Das als Kolben angetriebene Kraftübertragungsteil bewegt sich durch einen Innenraum der hohl ausgebildeten Wickelwelle, wie es beispielsweise in der DE 43 31 723 bei der Gurtspule eines Gurtaufrollers zum Strammen des Sicherheitsgurtes bekannt ist.

Bei einem weiteren bevorzugten Ausführungsbeispiel der Erfindung wird die Kraftübertragung zwischen dem pyrotechnisch angetriebenen Kraftübertragungsteil, welches an der axialen Führung sich abstützt, auf die Wickelwelle dadurch erreicht, daß wenigstens eine Schneide zwischen der Innenseite der Wickelwelle und der Außenseite des als Rotationskörper ausgebildeten Kraftübertragungsteils vorgesehen ist. Es ist wenigstens eine Schneide vorgesehen, bevorzugt befinden sich jedoch am Außenumfang des Kraftübertragungsteils drei Schneiden, die in gleichen Winkelabständen (120°) voneinander angeordnet sind. Zur Drehmomenterzeugung kann die axiale Führung ein Gewinde aufweisen, so daß beim axialen Antrieb des kolbenförmigen Kraftübertragungsteils dieses eine Drehbewegung ausführt, welche bei der axialen Bewegung auf die Wickelwelle, insbesondere über die wenigstens eine Schneide, übertragen wird. Die Schneide besteht aus einem stärkeren Material als das Material, in welches sie einschneidet. Beim bevorzugten Ausführungsbeispiel ist daher die Innenseite der Wickelwelle aus einem weicheren Material als das der jeweiligen Schneide. Ein von einem pyrotechnischen Antrieb angetriebenes Kraftübertragungsteil zum Antrieb einer Gurtspule eines Gurtaufrollers, bei dem die Kraftübertragung mit Hilfe von Schneiden erfolgt, ist in der DE 43 42 666 A 1 beschrieben.

Die axiale Führung für das Kraftübertragungsteil und die Drehung der Wickelwelle kann stabförmig ausgebildet sein, beispielsweise als Vierkantstab. Zur Erzielung eines Gewindes kann der Vierkantstab gedreht sein. Es ist jedoch auch möglich, einen Rundstab zu verwenden, in welches ein Gewinde eingeformt ist. In diesen Fällen ergibt sich die Drehmomentbildung durch das Gewinde.

Im Normalbetrieb und während des Strammantriebs ist die axiale Führung fest an ihren beiden Enden mit dem Fahrzeugaufbau verbunden. Am Ende der Strammbewegung wird jedoch ein Ende der axialen Führung von der festen Verbindung mit dem Fahrzeugaufbau gelöst, so daß die axiale Führung die Funktion eines Torsionstabes, insbesondere zur Kraftbegrenzung bei entgegen der Strammrichtung wirksamen Kräften, hat. Am Ende der Strammbewegung ist die Wickelwelle kraft- und formschlüssig, insbesondere über das Kraftübertragungsteil mit dem vom Fahrzeugaufbau gelösten Ende der axialen Führung verbunden. Auf diese Weise wird die gewünschte Kraftbegrenzung erreicht.

Zwischen der Wickelwelle und dem Fahrzeugaufbau wird eine Rücklaufsperre nach dem Strammvorgang bei einer Bewegung der Wickelwelle in Bandabzugsrichtung aktiviert werden. Hierfür werden auf ortsfest angeordnete Schrägen auflaufende Wälzkörper, welche an einem oder an beiden Enden der Wickelwellenoberfläche abrollen, auflaufen. Dadurch, daß die Rücklaufsperre zwischen dem Umfang der Wickelwelle und dem Fahrzeugaufbau zur Wirkung kommt, kann im Bereich des Wickelwelleninnern, wie erläutert, ein Lastbegrenzer vorgesehen sein.

Bei der Erfindung erreicht man eine Integration der Funktion des Endbeschlages, der Strafferfunktion und der Kraftbegrenzungsfunktion in einer Baueinheit am einen Ende des Gurtbandes des Sicherheitsgurtes.

Anhand eines Ausführungsbeispiels wird die Erfindung in den Figuren noch näher erläutert. Es zeigt:
- Fig. 1:: in teilweise geschnittener schematischer Darstellung ein Ausführungsbeispiel Ohne Rücklaufsperre;
- Fig. 2:: einen Kraftübertragungskörper, welcher beim Ausführungsbeispiel zum Einsatz kommen kann:
- Fig. 3:: einen Schnitt durch einen Antriebskörper mit pyrotechnischem Kraftspeicher;
- Fig. 4:: einen Schnitt durch eine axiale Führung;
- Fig. 5:: ein Ausführungsbeispiel für die Rücklaufsperre;
- Fig. 6:: ein weiteres Ausführungsbeispiel für einen Antriebskörper mit pyrotechnischem Kraftspeicher;
- Fig. 7:: ein Ausführungsbeispiel für eine Wickelwelle; und
- Fig. 8:: eine Gurtbandverankerung an der in der Fig. 7 dargestellten Wickelwelle in Seitenansicht.

Beim dargestellten Ausführungsbeispiel ist in einem Befestigungsrahmen 1 eine axiale Führung 3, welche stabförmig ausgebildet ist, an ihren beiden Enden befestigt An den Befestigungsstellen des einen Endes sind Schweißstellen 4 und am anderen Ende sind als Befestigungsstellen Schweißstellen 5 vorgesehen. Der Befestigungsrahmen 1 ist mit Hilfe beispielsweise einer nicht näher dargestellten Schraube am Fahrzeugaufbau 12 befestigt. Es ist jedoch auch möglich, daß die axiale Führung 3 mit ihren beiden Enden direkt mit dem Fahrzeugaufbau 12 verbunden ist, wenn es die räumlichen Gegebenheiten im Fahrzeug erlauben.

Auf der axialen Führung 3 ist eine Wickelwelle 2 gelagert. Mit der Wickelwelle 2 ist ein Ende eines Gurtbandes 10 eines Sicherheitsgurtes fest verbunden. Die an der axialen Führung 3 gelagerte Wickelwelle 2, mit welcher das eine Ende des Sicherheitsgurtbandes verbunden ist, bildet somit den einen Endbeschlag des Sicherheitsgurtes.

Die stabförmig ausgebildete axiale Führung 3 kann als Rundstab ausgebildet sein und ein Gewinde 14 aufweisen. Es ist jedoch auch möglich, die stabförmige axiale Führung 3 als Vierkant auszubilden. Dieser Vierkantstab kann zur Erzielung des Gewindes 14 um seine Achse gedreht sein. Bevorzugt wird eine Gewindedrehung.

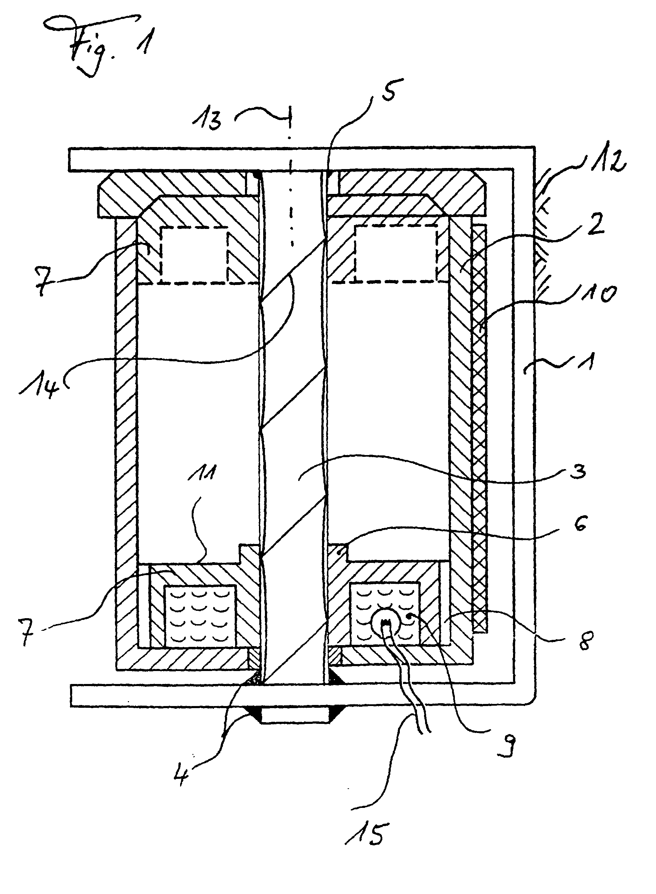

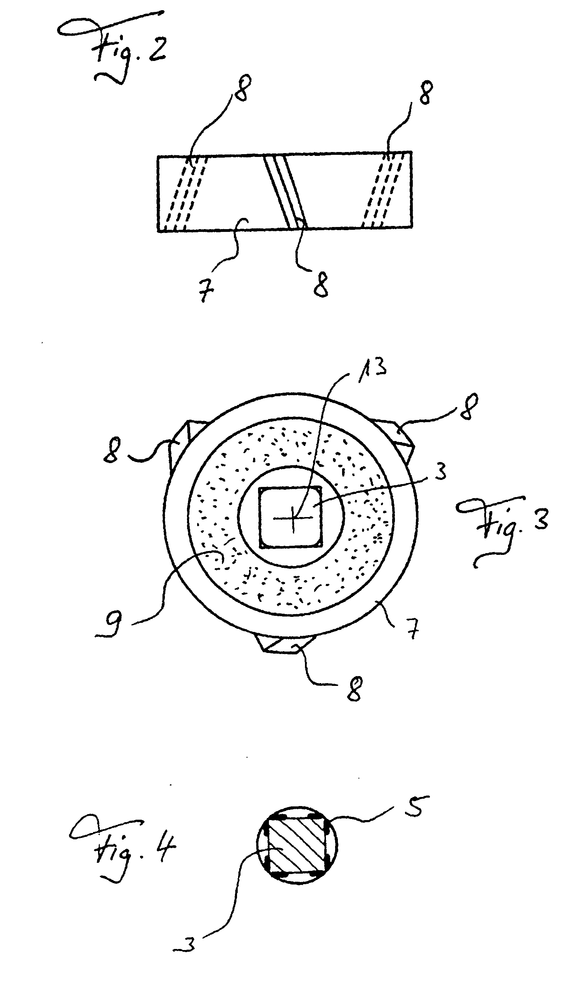

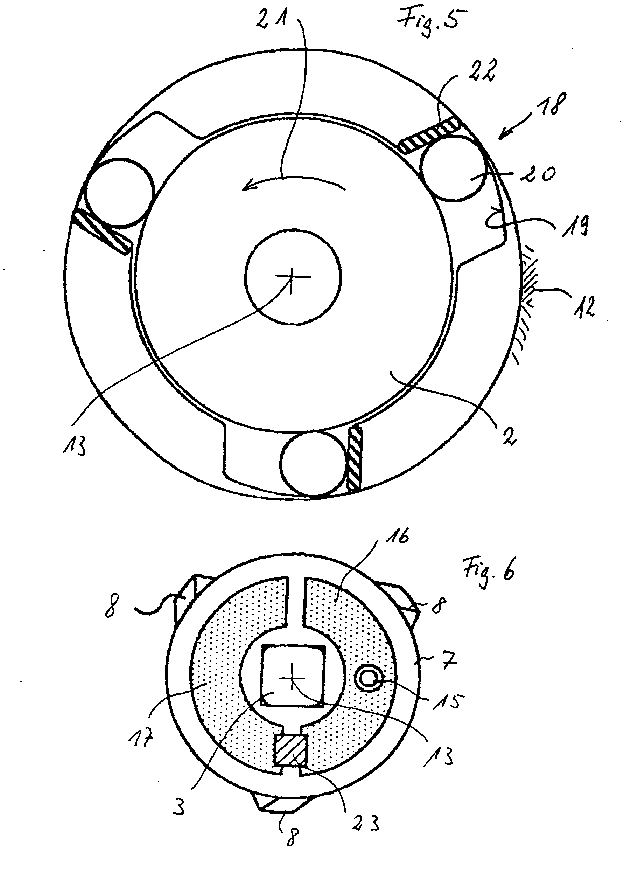

Neben der Wickelwelle 2 ist auf der axialen Führung 3 ein Kraftübertragungskörper 7 gelagert. Der Kraftübertragungskörper 7 ist als Rotationskörper ausgebildet. Eine schnittbildliche Darstellung ist in Fig. 3 zu sehen. Im Falle eines Gewindes 14 in der axialen Führung 3 steht die Innenseite des Kraftübertragungsteiles 7 in Gewindeeingriff mit dem Gewinde 14.

An der Außenseite, welche kreiszylindrisch ausgebildet ist, besitzt das Kraftübertragungsteil 7 Schneiden 8. Beim dargestellten Ausführungsbeispiel sind drei Schneiden in gleichen Winkelabständen (120°) am Umfang des Kraftübertragungsteiles 7 vorgesehen. In bevorzugter Weise besitzen die Schneiden 8 einen Anstellwinkel gegenüber der Wikkelwellenachse 13. Der Anstellwinkel kann zwischen 10° und 20° liegen. Bevorzugt liegt er bei 15°.

Die Schneiden 8 können mit der Innenseite der Wickelwelle in Schneideingriff kommen. Die Schneiden 8 besitzen ein härteres Material als die Innenseite der Wickelwelle 2.

Im Innern des Kraftübertragungsteiles 7 ist ein Strafferantrieb 9 für einen Gurtstraffer 11 dadurch, daß ein Zusammenwirken der einzelnen Bauteile gebildet wird, vorgesehen. Der Strafferantrieb 9 besitzt als Kraftspeicher ein pyrotechnisches Treibmittel, das beispielsweise elektrisch (elektrische Zündeinrichtung 15) gezündet werden kann. Es ist auch möglich, eine mechanische Zündeinrichtung für den Strafferantrieb 9 vorzusehen.

Durch das gezündete Treibmittel wird das Kraftübertragungsteil 7 entlang der axialen Führung 3 bewegt. Aufgrund des Gewindeeingriffes und/oder der im Winkel gegenüber der Achse 13 angestellten Schneiden 8 wird ein auf die Wickelwelle 2 wirkendes Drehmoment erzeugt, so daß das Gurtband 10 auf die Wickelwelle 2 aufgewickelt wird. Durch das Gewinde 14 kann die Anzahl der Umdrehungen, welche die Wickelwelle 2 ausführt, noch erhöht werden. Am Ende der Strammbewegung werden die Verbindungsstellen 5, welche Schweißstellen sein können, zwischen der axialen Führung 3 und dem Befestigungsrahmen 1 gelöst. Dies erfolgt mit Hilfe einer Stoßbuchse 6, welche am vorderen Ende des Kraftübertragungsteiles 7 vorgesehen ist. Am Ende der Strammbewegung wird zwischen der Wickelwelle 2 und dem vom Befestigungsrahmen 1 gelösten Ende der axialen Führung 3 ein Form- und Kraftschluß hergestellt. Dieser Formund Kraftschluß wird hergestellt durch den Schneideingriff des Kraftübertragungsteiles 7 in die Innenseite der Wickelwelle 2 und den Gewindeeingriff bzw. formschlüssigen Eingriff (bei Vierkantstab) mit der axialen Führung 3. Der Form- und Kraftschluß zwischen der Wickelwelle 2 und der stabförmigen axialen Führung 3 erfolgt an dem Ende, an welchem die axiale Führung 3 vom Befestigungsrahmen 1 durch die Stoßbuchse 6 gelöst worden ist.

Wenn entgegen der Strammrichtung auf das Gurtband eine Kraft ausgeübt wird, beispielsweise durch Vorverlagerung des Körpers des Fahrzeuginsassen, wird diese Kraft über die Wickelwelle 2, das Kraftübertragungsteil 7 und die sich wie ein Torsionsstab verformende axiale Führung 3, welche am anderen Ende bei den Verbindungsstellen 4 noch fest mit dem Befestigungsrahmen 1 verbunden ist, über den Befestigungsrahmen in den Fahrzeugaufbau 12 geleitet. Aufgrund der Verformung der axialen Führung 3 nach Art eines Torsionsstabes erreicht man eine Kraftbegrenzungsfunktion.

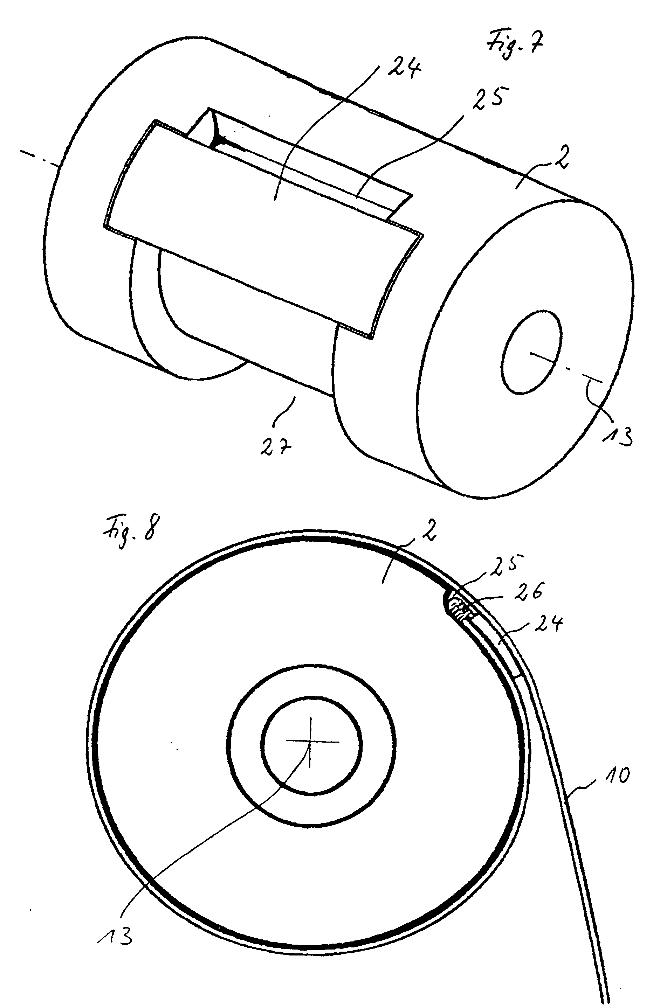

In der Fig. 5 ist eine Rücklaufsperre 18 dargestellt. Diese wird nach dem Strammvorgang, bei welchem die Wickelwelle 2 in der Fig. 5 entgegen dem Uhrzeigersinn (Teil 21) gedreht wird, bei einer Drehung der Wickelwelle 2 in entgegengesetzter Richtung, d.h. in Bandabzugsrichtung, aktiviert. Beim Aktivieren der Rücklaufsperre 18 laufen Wälzkörper 20, die an einer Oberfläche der Wickelwelle 2 abrollen, auf ortsfeste Schrägen 19, welche starr mit dem Fahrzeugaufbau 12 verbunden sind, auf. Die Rücklaufsperre 18 wird zwischen dem Fahrzeugaufbau 12 und dem Umfang der Wickelwelle 2 wirksam. Es können daher im Innern der Wickelwelle Lastbegrenzereinrichtungen, wie schon beschrieben, vorgesehen sein. Beim Straffen des Gurtbandes 10 rollen die Wälzkörper 20 an der Oberfläche der Wickelwelle 2 ab, wobei sie an federnd ausgebildeten Anschlägen, die ebenfalls ortsfest angeordnet sind, anliegen. An beiden Enden der Wickelwelle 2 kann jeweils eine Rücklaufsperre 18 vorgesehen sein.

Bei dem in der Fig. 6 dargestellten Ausführungsbeispiel eines Kraftübertragungsteils 7 mit eingebautem Kraftspeicher besitzt der Kraftspeicher zwei Treibmittelsätze 16 und 17. Die beiden Treibmittelsätze 16 und 17 werden in zeitlicher Aufeinanderfolge gezündet. Für die Primärzündung des Treibmittelsatzes 16 kann die elektrische Zündeinrichtung 15 vorgesehen sein. Zwischen den beiden Treibsätzen 16 und 17 kann ein chemisches Zeitverzögerungselement 23 vorgesehen sein. Hierdurch wird gewährleistet, daß zunächst der erste Treibmittelsatz 16 gezündet wird und nach einer bestimmten Zeit nach dem Abbrand des chemischen Zeitverzögerungselementes 23 der zweite Treibmittelsatz 17 gezündet wird. Man erreicht hierdurch einen sanften Anschub beim Strammvorgang Die beiden Treibsätze 16 und 17 sind in dafür vorgesehene Abbrandkammern im Körper des Kraftübertragungsteils 7 vorgesehen. Anstelle der zwei vorgesehenen Treibmittelsätze können auch mehr nacheinander zündbare Treibmittelsätze vorgesehen sein.

In der Fig. 7 ist ein Ausführungsbeispiel für die Wickelwelle 2 dargestellt. Dieses Ausführungsbeispiel besitzt eine bevorzugte Verankerung für das Ende des Sicherheitsgurtes 10. Die Verankerung für das Sicherheitsgurtende wird gebildet durch eine Verankerungsnische 25. Diese Verankerungsnische 25 ergibt sich aus einer zum Teil um die Wickelwellenachse 13 sich erstreckende Ausnehmung 27 an der Oberfläche des Wikkelwellenkörpers. Die Ausnehmung 27 hat einen spiralförmigen Verlauf und geht übergangslos in den kreiszylindrischen Teil an der Oberfläche der Wickelwelle 2 über. Quer über die Ausnehmung 27 erstreckt sich parallel zur Wickelwellenachse 13 ein Verankerungselement in Form eines Fixierbleches 24. Zwischen dem Anfang der Ausnehmung 27 und einer Kante des Fixierbleches 24 wird die Verankerungsnische 25 gebildet.

Das Ende des Sicherheitsgurtes 10 ist umgelegt und mit einer Vemähung 26 versehen. Hierdurch ergibt sich eine Verdickung des Endes des Sicherheitsgurtes 10. Diese Verdickung mit der Vernähung 26 befindet sich in der Verankerungsnische 25. Das Gurtband des Sicherheitsgurtes umschlingt dann zunächst im Bereich der spiralförmig verlaufenden Ausnehmung 27 die Wickelwelle 2 und geht dann in deren kreiszylindrischen Teil über und ist ferner über das Fixierblech 24 gelegt, wie aus der Fig. 8 zu ersehen ist. Ausgehend vom verdickten Ende des Sicherheitsgurtes 10 wird daher die Wickelwelle 2 vom Gurtband des Sicherheitsgurtes 10 in einem Umschlingungswinkel, der etwas größer als 360°, um beispielsweise 20° bis 30°, ist, mit einer ersten Windung umschlungen. Diese Betriebsstellung nimmt das Gurtband des Sicherheitsgurtes 10 an seinem Ende während des Normalbetriebes ein. Beim Straffvorgang wird infolge des erzeugten Drehmomentes am Sicherheitsgurt 10 ein Zug ausgeübt, welcher eine auf die Wickelwellenachse 13 gerichtete Kraftkomponente hat. Hierdurch wird das Fixierblech 24 und damit das in der Verankerungsnische 25 angeordnete verdickte Ende des Sicherheitsgurtes 10 fest im Material der Wickelwelle 2 beim Strammvorgang mit steigender Verankerungskraft verankert. Das Fixierblech 24 kann zusätzlich in den zu beiden Seiten der Ausnehmung 27 erhöhten Wickelwellenteilen der Wickelwelle 2 formschlüssig verankert sein. Die Höhe der Ausnehmung 27 kann etwa der Dicke des Gurtbandes des Sicherheitsgurtes 10 entsprechen. Hierdurch ergibt sich beim Aufwickeln des Sicherheitsgurtes während des Strammvorganges eine relativ glatte Auflagefläche für die beim Straffen auf die Wickelwelle 2 aufgewickelten Gurtbandlagen.

Der in den Endbeschlag integrierte Gurtstraffer kann als einziger Gurtstraffer für das Sicherheitsgurtband zum Einsatz kommen. Bei der Gurtstraffung werden keine hohen Beschleunigungen auf Bauteile des Schlosses und des Gurtaufrollers am anderen Gurtbandende ausgeübt. Es ist natürlich auch möglich, zusätzlich zu einem Schloßstraffer oder Gurtaufrollerstraffer den beschriebenen, in den Endbeschlag integrierten Gurtstraffer einzusetzen.

## Patentansprüche

1. Rückhaltesystem in einem Kraftfahrzeug mit einem Dreipunktsicherheitsgurt (10), dessen erstes Gurtbandende mit einer als Endbeschlag des Dreipunktsicherheitsgurtes (10) dienenden Wickelwelle (2), über welche bei Normalbetrieb vom Gurtband ausgehende Kräfte in den Fahrzeugaufbau (12) geleitet werden, und dessen zweites Gurtbandende mit einer von einer Rückholfeder in Bandaufwickelrichtung beaufschlagten Gurtspule eines Gurtaufrollers verbunden sind, wobei die Wickelwelle (2) bei überhöhter Fahrzeugbeschleunigung bzw. -abbremsung durch einen Gurtstrafferantrieb (9) über einen Kraftübertragungsteil (7) zum Strammen des Sicherheitsgurtes (10) antreibbar ist **dadurch gekennzeichnet, daß** der Kraftübertragungsteil (7) als rotationssymmetrischer Körper ausgebildet ist und zwischen dem Fahrzeugaufbau (12) und einer an wenigstens einem Ende der Wickelwelle (2) vorgesehenen Umfangsfläche eine Rücklaufsperre (18) mit Wälzkörpern (20), die nach dem Strammen des Sicherheitsgurtes (10) bei einer Bewegung der Wickelwelle (2) in Bandauszugsrichtung an der Umfangsfläche der Wickelwelle abrollen und auf ortsfeste Schrägen (19) auflaufen, angeordnet ist.

2. Rückhaltesystem nach Anspruch 1, **dadurch gekennzeichnet, daß** die Wickelwelle (2) auf einer axialen Führung (3), welche direkt oder über einen Befestigungsrahmen (1) am Fahrzeugaufbau (12) befestigt ist, zumindest beim Strammen des Sicherheitsgurtes (10) drehbar gelagert ist.

3. Rückhaltesystem nach Anspruch 1, **dadurch gekennzeichnet, daß** das Kraftübertragungsteil (7) ein Drehmoment auf die Wickelwelle (2) überträgt.

4. Rückhaltesystem nach einem der Ansprüche 1 bis 3, **dadurch gekennzeichnet, daß** der Strafferantrieb (9) ein pyrotechnisches Treibmittel als Kraftspeicher aufweist.

5. Rückhaltesystem nach einem der Ansprüche 1 bis 4, **dadurch gekennzeichnet, daß** die Wickelwelle (2) ferner über das Kraftübertragungsteil (7) mit dem Fahrzeugaufbau (12) im Normalbetriebform- und kraftschlüssig verbunden ist.

6. Rückhaltesystem nach einem der Ansprüche 1 bis 5, **dadurch gekennzeichnet, daß** das Kraftübertragungsteil (7) als entlang der Achse (13) der Wickelwelle (2) antreibbarer Kolben ausgebildet ist.

7. Rückhaltesystem nach Anspruch 6, **dadurch gekennzeichnet, daß** das als Kolben ausgebildete Kraftübertragungsteil (7) an der Innenseite der Wickelwelle (2) und an der Außenseite der axialen Führung (3) sich abstützt.

8. Rückhaltesystem nach Anspruch 7, **dadurch gekennzeichnet, daß** die axiale Führung (3) ein Gewinde (4) aufweist, mit dem das Kraftübertragungsteil (2) in Eingriff steht.

9. Rückhaltesystem nach einem der Ansprüche 6 bis 8, **dadurch gekennzeichnet, daß** das als Kolben ausgebildete Kraftübertragungsteil (7) mit der Innenseite der Wickelwelle (2) über wenigstens eine Schneide (8) in Eingriff steht.

10. Rückhaltesystem nach Anspruch 9, **dadurch gekennzeichnet, daß** drei Schneiden (8) vorgesehen sind.

11. Rückhaltesystem nach Anspruch 9 oder 10, **dadurch gekennzeichnet, daß** die wenigstens eine Schneide (8) einen Anstellwinkel gegenüber der Achse (13) der Wickelwelle (2) aufweist.

12. Rückhaltesystem nach Anspruch 11, **dadurch gekennzeichnet, daß** der Anstellwinkel zwischen 10° und 20° liegt und insbesondere 15° beträgt.

13. Rückhaltesystem nach einem der Ansprüche 9 bis 12, **dadurch gekennzeichnet, daß** das Schneidenmaterial härter ausgebildet ist als das Material, in welches bei der Strafferantriebskraftübertragung die wenigstens eine Schneide (8) sich bei der Axialbewegung des angetriebenen Kraftübertragungsteils (7) einschneidet.

14. Rückhaltesystem nach einem der Ansprüche 9 bis 13, **dadurch gekennzeichnet, daß** das Kraftübertragungsteil (7) als Rotationskörper ausgebildet ist, an dessen Umfang die wenigstens eine Schneide (8) vorgesehen ist.

15. Rückhaltesystem nach einem der Ansprüche 1 bis 14, **dadurch gekennzeichnet, daß** der Kraftspeicher (9) für den pyrotechnischen Strafferantrieb im Kraftübertragungsteil (7) angeordnet ist.

16. Rückhaltesystem nach einem der Ansprüche 1 bis 15, **dadurch gekennzeichnet, daß** der Kraftspeicher (9) mehrere zeitlich nacheinander zündbare Treibsätze (16, 17) aufweist.

17. Rückhaltesystem nach einem der Ansprüche 1 bis 16, **dadurch gekennzeichnet, daß** die axiale Führung (3) bei einer Drehung der Wickelwelle (2) entgegen der Strammrichtung als lastbegrenzender Torsionsstab wirkt.

18. Rückhaltesystem nach einem der Ansprüche 1 bis 17, **dadurch gekennzeichnet, daß** die axiale Führung (3) während der Strammbewegung an ihren beiden Enden fest mit dem Fahrzeugaufbau (12) verbunden ist und daß am einen Ende eine feste Verbindung der axialen Führung (3) mit dem Fahrzeugaufbau (12) am Ende der Strammbewegung lösbar ist.

19. Rückhaltesystem nach einem der Ansprüche 1 bis 18, **dadurch gekennzeichnet, daß** am Ende der Strammbewegung das Kraftübertragungsteil (7) die Wickelwelle (2) mit dem vom Fahrzeugaufbau (12) gelösten Ende der als Torsionsstab wirkenden axialen Führung (3) formschlüssig und kraftschlüssig verbindet.

20. Rückhaltesystem nach einem der Ansprüche 1 bis 19, **dadurch gekennzeichnet, daß** beim Normalbetrieb die erste Bandlage des Sicherheitsgurtes (10) um etwas mehr als 360° um die Wickelwellenachse geschlungen ist, so daß das Sicherheitsgurtende in einer Verankerungsnische (25), welche in die Oberfläche des Wickelwellenkörpers eingeformt ist, durch den beim Straffen des Sicherheitsgurtes (10) erzeugten Verankerungsdruck verankert ist.

21. Rückhaltesystem nach Anspruch 20, **dadurch gekennzeichnet, daß** das Sicherheitsgurtende durch ein sich etwa parallel zur Wickelwellenachse (13) erstrekkendes Fixierelement (24), über welches sich das an den Umschlinungswinkel von 360° anschließende Gurtbandstück des Sicherheitsgurtes (10) im Normalbetrieb gelegt ist, in der Verankerungsnische (25) festgehalten ist.

## Claims

1. A restraint system in a motor vehicle, having a three-point seat belt (1), the first belt webbing end of which is connected with a winding shaft (2) serving as an end fitting for the three-point seat belt (10) and via which forces originating with the belt webbing in normal operation are conducted into the vehicle structure (12), and the second belt webbing end of which is connected with a belt reel of a seat belt retractor acted upon by a restoring spring in the webbing winding direction, wherein the winding shaft (2) may, in the event of excessive vehicle acceleration or braking, be driven by a belt tightener drive (9) via a force transmission element (7) so as to tauten the seat belt (10), **characterised in that** the force transmission element (7) takes the form of a rotationally symmetrical member and a reverse movement lock (18) with rolling members (20) is arranged between the vehicle structure (12) and a circumferential surface provided at at least one end of the winding shaft (2), which rolling members (20) roll over the circumferential surface of the winding shaft and run onto stationary sloping surfaces (19) upon movement of the winding shaft (2) in the webbing extraction direction after tautening of the seat belt (10).

2. A restraint system according to claim 1, **characterised in that** the winding shaft (2) is mounted on an axial guide (3) so as to be rotatable at least on tautening of the seat belt (10), said axial guide being attached directly or via a fastening frame (1) to the vehicle structure (12).

3. A restraint system according to claim 1, **characterised in that** the force transmission element (7) transmits torque to the winding shaft (2).

4. A restraint system according to one of claims 1 to 3, **characterised in that** the tightener drive (9) comprises a pyrotechnic propellant as energy store.

5. A restraint system according to one of claims 1 to 4, **characterised in that** the winding shaft (2) is additionally connected form-fittingly and force-lockingly with the vehicle structure (12) via the force transmission element (7) in normal operation.

6. A restraint system according to one of claims 1 to 5, **characterised in that** the force transmission element (7) takes the form of a piston drivable along the axis (13) of the winding shaft (2).

7. A restraint system according to claim 6, **characterised in that** the force transmission element (7) in the form of a piston rests against the inside of the winding shaft (2) and against the outside of the axial guide (3).

8. A restraint system according to claim 7, **characterised in that** the axial guide (3) comprises a thread (4), with which the force transmission element (2) is engaged.

9. A restraint system according to one of claims 6 to 8, **characterised in that** the force transmission element (7) in the form of a piston is engaged with the inside of the winding shaft (2) via at least one cutting edge (8).

10. A restraint system according to claim 9, **characterised in that** three cutting edges (8) are provided.

11. A restraint system according to claim 9 or claim 10, **characterised in that** the cutting edge (8), of which there is at least one, exhibits an angle of attack relative to the axis (13) of the winding shaft (2).

12. A restraint system according to claim 11, **characterised in that** the angle of attack is between 10° and 20° and amounts in particular to 15°.

13. A restraint system according to one of claims 9 to 12, **characterised in that** the cutting edge material is harder than the material into which the cutting edge (8), of which there is at least one, cuts upon axial movement of the driven force transmission element (7) in the event of tightener drive force transmission.

14. A restraint system according to one of claims 9 to 13, **characterised in that** the force transmission element (7) takes the form of a rotational body, at the circumference of which there is provided the cutting edge (8) of which there is at least one.

15. A restraint system according to one of claims 1 to 14, **characterised in that** the energy store (9) for the pyrotechnic tightener drive is arranged in the force transmission element (7).

16. A restraint system according to one of claims 1 to 15, **characterised in that** the energy store (9) comprises a plurality of propellant charges (16, 17) ignitable one after the other.

17. A restraint system according to one of claims 1 to 16, **characterised in that** the axial guide (3) acts as a load-limiting torque rod in the event of the winding shaft (2) rotating contrary to the direction of tautening.

18. A restraint system according to one of claims 1 to 17, **characterised in that**, during the tautening movement, the axial guide (3) is connected at its two ends firmly with the vehicle structure (12) and **in that** the firm connection of the axial guide (3) with the vehicle structure (12) may be severed at one end at the end of the tautening movement.

19. A restraint system according to one of claims 1 to 18, **characterised in that**, at the end of the tautening movement, the force transmission element (7) connects the winding shaft (2) form-fittingly and force-lockingly with the end detached from the vehicle structure (12) of the axial guide (3) acting as a torque rod.

20. A restraint system according to one of claims 1 to 19, **characterised in that**, during normal operation, the first webbing layer of the seat belt (10) is wound by somewhat more than 360° about the winding shaft axis, such that the seat belt end is anchored in an anchoring recess (25), which is formed in the surface of the winding shaft member, by the anchoring pressure generated upon tightening of the seat belt (10).

21. A restraint system according to claim 20, **characterised in that** the seat belt end is held in the anchoring recess (25) by a fixing element (24) extending approximately parallel to the winding shaft axis (13), over which fixing element the webbing piece of the seat belt (10) adjoining the 360° angle of belt wrap is positioned in normal operation.

## Revendications

1. Système de retenue pour un véhicule automobile comportant une ceinture de sécurité à trois points (10), la première extrémité de la sangle de la ceinture étant reliée à un arbre d'enroulement (2), servant de ferrure d'extrémité de la ceinture de sécurité à trois points (10), assurant pendant le fonctionnement normal la transmission des forces émanant de la sangle de la ceinture vers la carrosserie du véhicule (12), la deuxième extrémité de la sangle étant reliée à une bobine d'un enrouleur de la ceinture, sollicitée dans la direction de l'enroulement de la sangle par un ressort de rappel, l'arbre d'enroulement (2) pouvant être actionné par un entraînement du dispositif de tension de la ceinture (9) par l'intermédiaire d'un élément de transmission de force (7) en vue de la tension de la ceinture de sécurité (10) en cas d'une accélération ou d'un freinage excessifs du véhicule, **caractérisé en ce que** l'élément de transmission de force (7) a la forme d'un corps à rotation symétrique, un cliquet anti-retour (18) comportant des corps rotatifs (20), roulant après la tension de la ceinture de sécurité (10) en cas d'un déplacement de l'arbre d'enroulement dans la direction du déroulement de la sangle le long de la surface de la périphérie de l'arbre d'enroulement et butant contre des chanfreins stationnaires (19), étant agencé entre la carrosserie du véhicule (12) et une surface périphérique agencée au moins au niveau d'une extrémité de l'arbre d'enroulement (2).

2. Système de retenue selon la revendication 1, **caractérisé en ce que** l'arbre d'enroulement (2) est agencé par rotation sur un guidage axial (3), fixé directement ou par l'intermédiaire d'un cadre de fixation (1) sur la carrosserie du véhicule (12), au moins au cours de la tension de la ceinture de sécurité (10).

3. Système de retenue selon la revendication 1, **caractérisé en ce que** l'élément de transmission de force (7) transmet un couple de rotation à l'arbre d'enroulement (2).

4. Système de retenue selon l'une des revendications 1 à 3, **caractérisé en ce que** l'entraînement du dispositif de tension (9) comporte un propulseur pyrotechnique comme accumulateur d'énergie.

5. Système de retenue selon l'une des revendications 1 à 4, **caractérisé en ce que** l'arbre d'enroulement (2) est en outre relié pendant le fonctionnement normal de manière mécanique et positive à la carrosserie du véhicule (12) par l'intermédiaire de l'élément de transmission de force (7).

6. Système de retenue selon l'une des revendications 1 à 5, **caractérisé en ce que** l'élément de transmission de force (7) a la forme d'un piston pouvant être entraîné le long de l'axe (13) de l'arbre d'enroulement (2).

7. Système de retenue selon la revendication 6, **caractérisé en ce que** l'élément de transmission de force sous forme de piston (7) est supporté sur le côté interne de l'arbre d'enroulement (2) et sur le côté externe du guidage axial (3).

8. Système de retenue selon la revendication 7, **caractérisé en ce que** le guidage axial (3) comporte un filetage (4) dans lequel s'engage l'élément de transmission de force (2).

9. Système de retenue selon l'une des revendications 6 à 8, **caractérisé en ce que** l'élément de transmission de force sous forme de piston (7) est engagé dans le côté interne de l'arbre d'enroulement (2) par l'intermédiaire d'au moins une arête tranchante (8).

10. Système de retenue selon la revendication 9, **caractérisé en ce qu'**il comporte trois arêtes tranchantes (8).

11. Système de retenue selon les revendications 9 ou 10, **caractérisé en ce que** la au moins une arête tranchante (8) forme un angle d'inclinaison (d'attaque) par rapport à l'axe (13) de l'arbre d'enroulement (2).

12. Système de retenue selon la revendication 11, **caractérisé en ce que** l'angle d'inclinaison est compris entre 10° et 20° et correspond en particulier à 15°.

13. Système de retenue selon l'une des revendications 9 à 12, **caractérisé en ce que** le matériau de l'arête tranchante est plus dur que le matériau dans lequel pénètre la au moins une arête tranchante (8) en cas de transmission de la force de l'entraînement du dispositif de tension lors du déplacement axial de l'élément de transmission de force entraîné (7).

14. Système de retenue selon l'une des revendications 9 à 13, **caractérisé en ce que** l'élément de transmission de force (7) a la forme d'un corps de rotation, sur la périphérie duquel et agencée la au moins une arête tranchante (8).

15. Système de retenue selon l'une des revendications 1 à 14, **caractérisé en ce que** l'accumulateur d'énergie (9) de l'entraînement pyrotechnique du dispositif de tension est agencé dans l'élément de transmission de force (7).

16. Système de retenue selon l'une des revendications 1 à 15, **caractérisé en ce que** l'accumulateur d'énergie (9) comporte plusieurs agents propulseurs (16, 17) à allumage successif dans le temps.

17. Système de retenue selon l'une des revendications 1 à 16, **caractérisé en ce que** le guidage axial (3) fait fonction de barre de torsion à limitation de la charge lors d'une rotation de l'arbre d'enroulement (2) dans la direction opposée à la direction de tension.

18. Système de retenue selon l'une des revendications 1 à 17, **caractérisé en ce que** le guidage axial (3) est relié fermement au niveau de ses deux extrémités à la carrosserie du véhicule (12) lors du mouvement de tension, un raccordement du guidage axial (3) avec la carrosserie du véhicule (12) pouvant être dégagé au niveau d'une extrémité lors de l'achèvement du mouvement de tension.

19. Système de retenue selon l'une des revendications 1 à 18, **caractérisé en ce qu'**après l'achèvement du mouvement de tension, l'élément de transmission de force (7) assure la liaison mécanique et positive de l'arbre d'enroulement (2) avec l'extrémité du guidage axial (3) faisant fonction de barre de torsion, dégagée de la carrosserie du véhicule (12).

20. Système de retenue selon l'une des revendications 1 à 19, **caractérisé en ce que** lors du fonctionnement normal, la première couche de la sangle de la ceinture de sécurité (10) est enroulée à un angle légèrement supérieur à 360° autour de l'axe de l'arbre d'enroulement, de sorte que l'extrémité de la ceinture de sécurité est ancrée dans une niche d'ancrage (25) formée dans la surface du corps de l'arbre d'enroulement, par l'intermédiaire de la pression d'ancrage produite par la tension de la ceinture de sécurité (10).

21. Système de retenue selon la revendication 20, **caractérisé en ce que** l'extrémité de la ceinture de sécurité est retenue dans la niche d'ancrage (25) par un élément de fixation (24) s'étendant de manière pratiquement parallèle à l'axe de l'arbre d'enroulement (13), au-dessus duquel est repliée lors du fonctionnement normal la partie de la sangle de la ceinture de sécurité (10) suivant l'angle d'enroulement de 360°.
